# EUROPEAN PATENT APPLICATION

(11) **EP 3 082 140 A1**
(43) Date of publication of application: **19.10.2016**
(21) Application number: 16159172.2
(22) Date of filing: 08.03.2016
(51) Int. Cl.: H01F 27/02, H01F 27/06, H01F 27/28

(54) **INDUCTOR ASSEMBLY FOR OBC OF ELECTRIC VEHICLE**

(30) Priority: 15.04.2015 KR 20150053029
(71) Applicant: LSIS Co., Ltd., Gyeonggi-do 14119 (KR)
(72) Inventor: LEE, Seung-Hun, Gyeonggi-do 14118 (KR)
(74) Representative: Zacco Sweden AB

(57) **Abstract**

Disclosed herein is an inductor assembly (100) for an on-board charger (OBC) of an electric vehicle capable of improving insulation and heat dissipation property, with improved assembling performance. The inductor assembly includes: a pair of inductors (110); a case (130) for accommodating the inductors (110) therein; a pair of insulating cases (140) installed in the case (130) for maintaining electrical insulation between the inductors (110); a mold (150) molded in the case (130) for integrally fixing the inductors (110), the insulating cases (140) and the case (130); and a cover (200) coupled to an upper portion of the case (130) for insulating the inductors (110) accommodated in the case (130) from the outside. Four lead wires (111a 111b,111c,111d) of the inductor coils are drawn out from the inductors (110). The led-out positions of at most three of the four lead wires (111a,111b,111c,111d) are fixed by one of the insulating cases (140) and the led-out positions of at least one of the four lead wires (111 a, 111 b, 111 c, 111 d) are fixed by the other one of the insulating cases (140).

## Description

### BACKGROUND

### 1. Technical Field

The present disclosure relates to an inductor assembly for an on-board charger (OBC) of an electric vehicle, and more particularly, to an inductor assembly for an OBC of an electric vehicle which can maintain electrical insulation between inductors and between the inductor assembly and a PCB circuit board in the OBC except for a plurality of coils.

### 2. Description of the Related Art

Recently, increasing attention has been given to development and supply of an eco-friendly vehicle.

In particular, the development of technologies for an electric vehicle (EV) is being actively conducted. Most electric vehicles are provided with an on-board charger (hereinafter, simply referred to as "OBC").

Further, the OBC of the electric vehicle is provided with an inductor assembly. Two inductors are installed in the inductor assembly while maintaining electrical insulation therebetween.

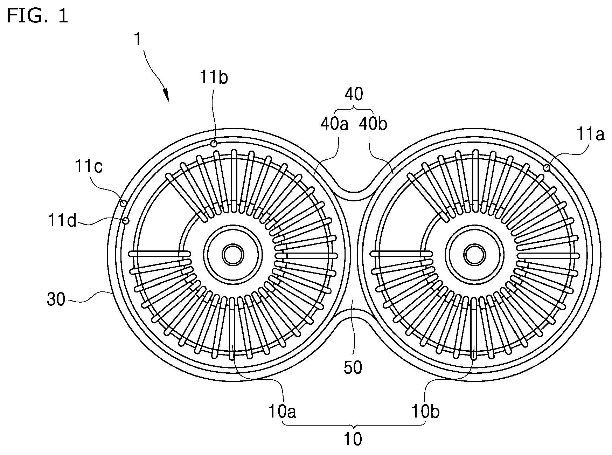

Fig. 1 schematically shows a conventional inductor assembly for an OBC of an electric vehicle.

An inductor assembly 1 shown in Fig. 1 includes two inductors 10 (10a and 10b), a case 30, insulating cases 40 (40a and 40b), and a mold 50.

In particular, the two inductors 10a and 10b are separately installed and accommodated in the case 30 to be surrounded by the insulating cases 40a and 40b, respectively.

After the two inductors 10a and 10b are respectively accommodated in the insulating cases 40a and 40b, they are molded with a material having a heat dissipation property and an electrical insulating property, forming the mold 50.

Accordingly, the case 30 allows the two inductors 10a and 10b to be separately accommodated and provides the space filled with the mold 50.

Further, the insulating cases 40a and 40b are used to maintain electrical insulation between the case 30 and the two inductors 10a and 10b and insulate the two inductors 10a and 10b from each other.

The mold 50 provides a heat dissipation function and serves to fix components of the inductor assembly 1.

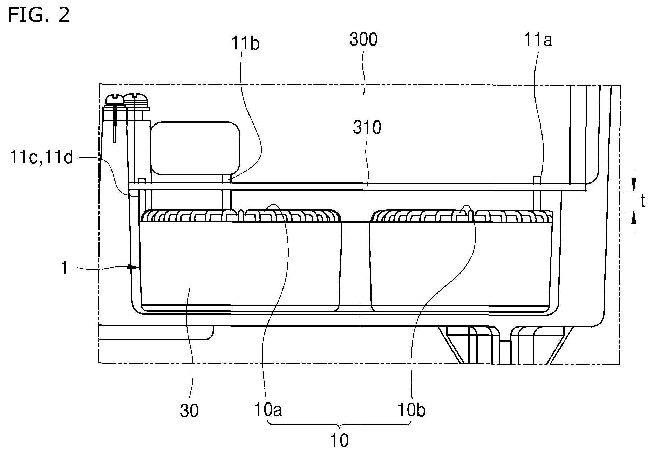

Fig. 2 shows the conventional inductor assembly configured as described above installed in the OBC of the electric vehicle.

As shown in Fig. 2, the two inductors 10a and 10b separately accommodated in the insulating cases 40a and 40b (see Fig. 1) are installed in an OBC 300 while being accommodated in the case 30 having an open upper portion.

Four coils 11a to 11d drawn out from the two inductors 10a and 10b are electrically connected to a PCB circuit board 310 installed in the OBC 300 by soldering or the like.

In the conventional inductor assembly 1, however, the four coils 11a to 11d drawn out from the two inductors 10a and 10b are structurally not fixed in the case 30. Therefore, the electrical insulation cannot be sufficiently obtained and, further, an assembling performance becomes poor.

In addition, due to the open upper portion of the case 30, it is difficult to obtain sufficient electrical insulation between the inductor assembly 1 and the PCB circuit board 310 even through the two inductors 10a and 10b are fixedly accommodated in the case 30.

Besides, there is no structure for fixing the positions of the four coils 11a to 11d drawn out from the two inductors 10a and 10b, so that it is difficult to guide the four coils 11a to 11d to respective soldering positions on the PCB circuit board 310.

### SUMMARY

The present disclosure provides an inductor assembly for an OBC of an electric vehicle which can maintain electrical insulation between inductors and electrical insulation between itself and a PCB circuit board in the OBC except for a plurality of coils.

Further, the present disclosure also provides the inductor assembly for the OBC of the electric vehicle having the improved assembling performance.

In accordance with one aspect of the present disclosure, an inductor assembly for an on-board charger (OBC) of an electric vehicle includes: a pair of inductors; a case for accommodating the inductors therein; a pair of insulating cases installed in the case for maintaining electrical insulation between the inductors; a mold molded in the case for integrally fixing the inductors, the insulating cases and the case; and a cover coupled to an upper portion of the case for insulating the inductors accommodated in the case from the outside. Four coils are drawn out from the inductors, and led-out positions of at most three of the four coils are fixed by one of the insulating cases and led-out positions of at least one of the four coils are fixed by the other one of the insulating cases.

The case may be made of a metal having a heat dissipation property, and the insulating cases and the inductors may be installed in the case in this order through an open upper portion of the case.

The cover may include four protruding holders. The four protruding holders may guide the four coils to respective soldering positions when the four coils are connected to the respective soldering positions after penetrating through the cover.

The inductor assembly may further include: a plurality of fastening pieces between the case and the cover. The plurality of fastening pieces guides assembly positions between the case and the cover to fasten them with one another.

The inductor assembly may further include: a plurality of guide pieces for guiding a connection path of a coil in the case, wherein the plurality of guide pieces electrically insulates the coil from the case and the inductors.

The case may be made of an aluminum material. The insulating case and the cover may be made of polybutylene terephthalate (PBT), and the mold may be made of an epoxy material, for example.

In accordance with the present disclosure, the electrical insulation between two inductors can be maintained.

Further, in accordance with the present disclosure, when the inductor assembly is installed in the OBC, it is possible to maintain the electrical insulation between the inductor assembly and the PCB circuit board in the OBC except for the four coils drawn out from the two inductors.

For example, the four coils drawn out from the two inductors can be structurally fixed in the case. Therefore, the electrical insulation between the coil and the casing (or the insulating case) as well as the electrical insulation between the two inductors can be maintained. With this structure, the assembling performance can be improved.

Further, in accordance with the present disclosure, the open upper portion of the case where the two inductors are accommodated can be shielded by using the cover. Therefore, the electrical insulation between the inductor assembly and the PCB circuit board in the OBC can be sufficiently obtained after the inductor assembly is installed in the OBC.

Further, in accordance with the present disclosure, the positions of the four coils drawn out from the two inductors are guided to the respective soldering positions on the PCB circuit board by using the cover. Therefore, it is possible to provide improved convenience to the user.

### BRIEF DESCRIPTION OF THE DRAWINGS

Fig. 1 schematically shows a conventional inductor assembly for an OBC of an electric vehicle;
Fig. 2 shows the conventional inductor assembly installed in the OBC of the electric vehicle;
Fig. 3 schematically shows an inductor assembly for the OBC of the electric vehicle in accordance with an embodiment of the present disclosure;
Fig. 4 is an enlarged view illustrating area A shown in Fig. 3;
Fig. 5 is an enlarged view illustrating area B shown in Fig. 3;
Fig. 6 shows a cover coupled to the inductor assembly in accordance with the embodiment of the present disclosure; and
Fig. 7 shows four coils connected to a PCB circuit board after the inductor assembly in accordance with the embodiment of the present disclosure is installed in the OBC.

### DETAILED DESCRIPTION

Advantages and features of the present disclosure and methods to achieve them will become apparent from the descriptions of exemplary embodiments herein below with reference to the accompanying drawings. However, the present invention is not limited to exemplary embodiments disclosed herein but may be implemented in various different ways. The exemplary embodiments are provided for making the disclosure of the present invention thorough and for fully conveying the scope of the present invention to those skilled in the art. It is to be noted that the scope of the present invention is defined only by the claims. Like reference numerals denote like elements throughout the descriptions.

Hereinafter, an inductor assembly for an on-board charger (OBC) of an electric vehicle in accordance with an embodiment of the present disclosure will be described in detail with reference to the accompanying drawings.

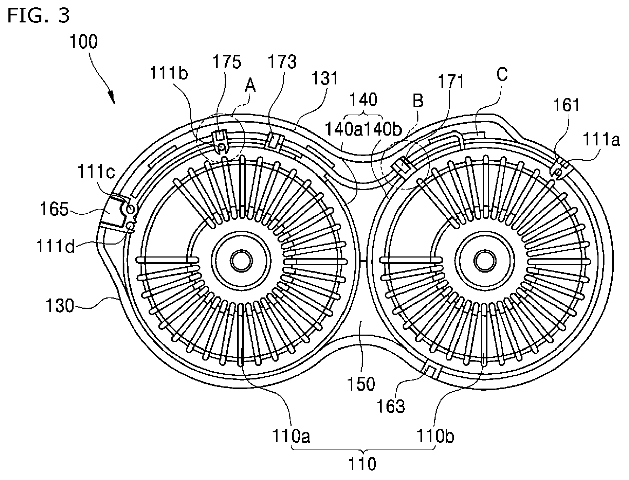

Fig. 3 schematically shows the inductor assembly for the OBC of the electric vehicle in accordance with the embodiment of the present disclosure.

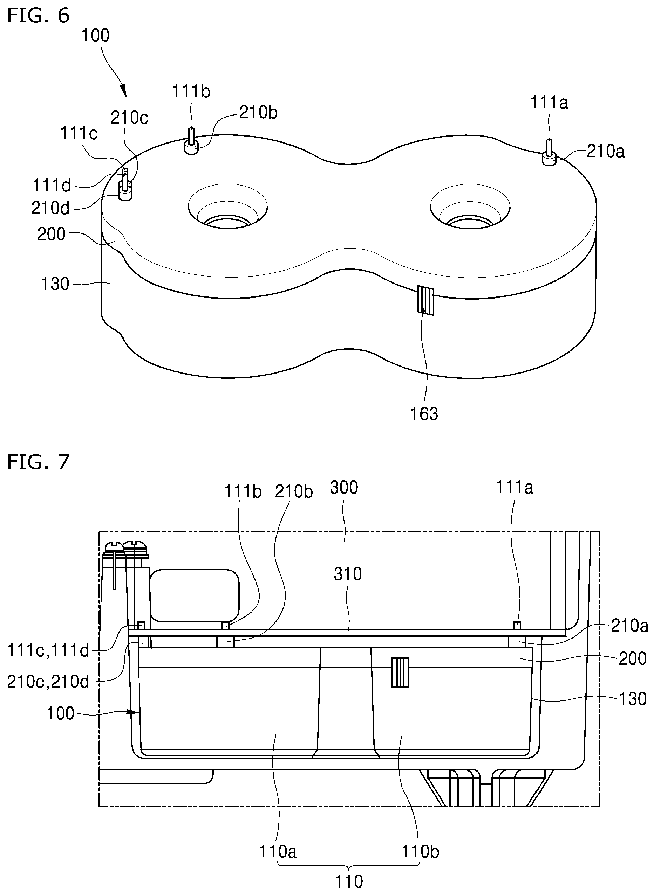

Referring to Fig. 3, the inductor assembly for the OBC of the electric vehicle (hereinafter, simply referred to as "inductor assembly") 100 includes a pair of inductors 100 (110a and 110b); a case 130; a pair of insulating cases 140 (140a and 140b); a mold 150; and a cover 200 (see, e.g., Fig. 6).

The inductor assembly 100 includes the pair of the inductors 110a and 110b.

Each of the inductors 110a and 110b is formed by winding a coil around an annular-shaped member and is one of the important components constituting an electric circuit. Further, each of the inductors 110a and 110b induces a voltage in proportion to a current variation.

The case 130 may have a shape to accommodate therein the inductors 110a and 110b.

For example, the case 130 may have a shape of '∞' as shown in Fig. 3.

The case 130 may be formed of an excellent heat dissipation material such as aluminum (Al) or the like.

In addition, the case 130 may be formed of various materials by using, e.g., a composite material which has light-weight with sufficient structural rigidity and excellent heat dissipation.

Inside of the case 130, the insulating cases 140a and 140b are coupled to the case 130.

The insulating cases 140a and 140b are provided in positions where the inductors 110a and 110b are disposed in the case 130, respectively, to ensure electrical insulation between the inductors 110a and 110b.

For example, as shown in Fig. 3, the insulating case 140a is coupled to the case 130 such that the inductor 110a on the left side is surrounded by the insulating case 140a. Similarly, the insulating case 140b is coupled to the case 130 such that the inductor 110b on the right side is surrounded by the insulating case 140b.

Each of the insulating cases 140a and 140b may have a guide structure (not shown) to be installed easily at a predetermined position in the case 130.

A material forming each of the insulating cases 140a and 140b is not limited to a specific material and, for example, polybutylene terephthalate (PBT) may be used as the material to form each of the insulating cases 140a and 140b.

Further, the mold 150, which is formed by epoxy molding, may be provided in the case 130.

This mold 150 is molded in the case 130, so that the case 130, the insulating cases 140a and 140b, and the inductors 110a and 110b are integrally fixed.

Further, by molding the mold 150 in the case 130, the electrical insulation between the inductors 110a and 110b can be enhanced and heat generated from the inductors 110a and 110b may be dissipated through the mold 150.

However, the material for forming the mold 150 is not limited to the epoxy, and various materials can be used to form the mold 150 as long as the material has excellent properties in terms of a formability, an insulation and heat dissipation.

As described above, a cover 200 (see, e.g., Fig. 6) may be arranged at an upper portion of the case 130 in which the inductors 110a and 110b, the insulating cases 140a and 140b and the mold 150 are provided.

The cover 200 is coupled to the upper portion of the case 130 as shown in Fig. 6, which makes it possible to improve the effect of electrically insulating the inductors 110a and 110b installed in the case 130 from the external device such as a PCB circuit board 310 of the OBC (see, e.g., Fig. 7).

A material forming the cover 200 is not limited to a specific material and, for example, polybutylene terephthalate (PBT) may be used as the material forming the cover 200, as in the case of each of the insulating cases 140a and 140b.

In the inductor assembly 100 having the above described configuration, the pair of the insulating cases 140a and 140b and the pair of the inductors 110a and 110b are installed in the case 130 in this order through the open and uncovered upper portion of the case 130.

Four coils 111a to 111d are extended from the inductors 110a and 110b to be drawn out to the outside.

More specifically, the four coils 111a to 111d are extended from the inductors 110a and 110b in the case 130 and drawn out to the outside of the inductor assembly 100 by penetrating through the cover 200 (see, e.g., Fig. 6).

Further, when the inductor assembly 100 is attached to the OBC 300 (see, e.g., Fig. 7), the four coils 111a to 111d drawn out to the outside of the inductor assembly 100 are connected to the PCB circuit board 310 (see, e.g., Fig. 7) of the OBC 300 (see, e.g., Fig. 7) by soldering.

It is required to maintain electrical insulation between the four coils 111a to 111d and the case 130 as well as between the four coils 111a to 111d and the pair of inductors 110a and 110b.

However, in the conventional case, four coils drawn out from inductors are not structurally fixed in a manner that maintains the electrical insulation thereof in the case. Therefore, the electrical insulation of the coils cannot sufficiently be obtained. Further, there is difficulty in the assembly work.

In view of the above, in the embodiment of the present disclosure, the positions where the respective four coils 111a to 111d are drawn out to the outside are fixed by using the insulating cases 140a and 140b.

For example, the positions where the three coils 111b, 111c and 111d are drawn out to the outside, i.e., the led-out positions of the three coils 111b, 111c and 111d are fixed by the insulating case 140a on the left side in Fig. 3.

Similarly, the led-out position of the remaining coil 111a is fixed by the insulating case 140b on the right side in Fig. 3.

Accordingly, the positions where the four coils 111a to 111d are drawn out from the inductors 110a and 110b to the outside are confined. As a result, the insulation property can be improved compared to the conventional case.

Fig. 6 shows the cover coupled to the inductor assembly for the OBC of the electric vehicle in accordance with the embodiment of the present disclosure. Fig. 7 shows the four coils connected to the PCB circuit board after the inductor assembly in accordance with the embodiment of the present disclosure is installed in the OBC.

Referring to Fig. 6, the cover 200 has four protruding holders 210a to 210d.

The four protruding holders 210a to 210d allow the four coils 111a to 111d to be drawn out to predetermined positions after penetrating through the cover 200. Accordingly, the four coils 111a to 111d can be stably connected to the soldering positions on the PCB circuit board 310 of the OBC 300 (see Fig. 7).

Referring to Fig. 7, the inductors 110a and 110b accommodated in the case 130 are shielded from the outside by the cover 200. Accordingly, the electrical insulation from the PCB circuit board 310 of the OBC 300 can be sufficiently obtained.

Referring back to Fig. 3, there may be further provided a plurality of fastening pieces 161, 163 and 165 for coupling the case 130 and the cover 200 (see Fig. 6) by guiding assembly positions of the case 130 and the cover 200.

The fastening pieces 161, 163 and 165 may be connected by the insulating cases 140a and 140b or may be separately formed. The number, the position, the shape and the structure of the fastening pieces 161, 163 and 165 are not particularly limited.

In addition, there may be further provided inside the case 130 a plurality of guide pieces 171, 173 and 175 for guiding a connection path of a coil C such that the coil C can be connected along a predetermined path between the inductors 110a and 110b.

The electrical insulation of the coil C connected between the inductors 110a and 110b can be maintained by the guide pieces 171, 173 and 175.

The number, the position, the shape and the structure of the guide pieces 171, 173 and 175 are not particularly limited and may be variously modified.

As the specific examples, the function and the operation effect of the guide pieces formed at area A and area B shown in Fig. 3 will be described.

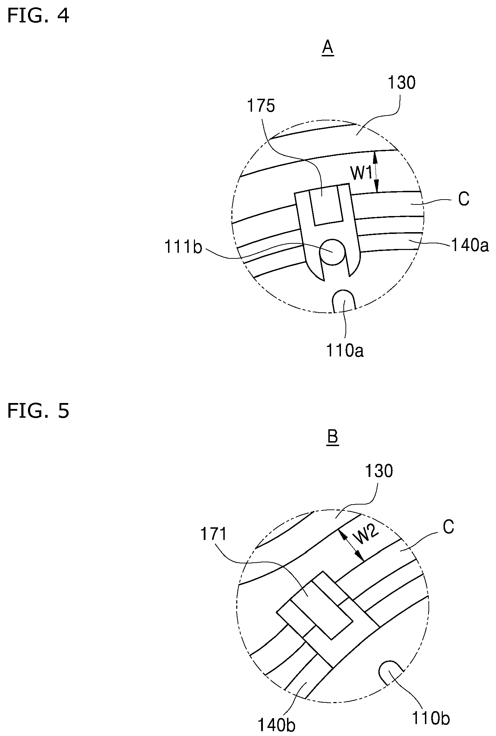

Fig. 4 is an enlarged view illustrating area A shown in Fig. 3. Referring to Fig. 4, the inductor 110a is provided in the case 130, and the insulating case 140a is coupled to the case 130 such that the inductor 110a is surrounded by the insulating case 140a.

The coil C connected between the inductors 110a and 110b (see Fig. 3) needs to be insulated from the inductor 110a and also needs to be insulated from the case 130.

To do so, the guide piece 175 is installed along the connection path of the coil C. Due to the guide piece 175, a gap W1 between the coil C and the case 130 can be maintained and the electrical insulation of the coil C can be maintained.

Fig. 5 is an enlarged view illustrating area B shown in Fig. 3. Referring to Fig. 5, the inductor 110b is provided in the case 130 and the insulating case 140b is coupled to the case 130 such that the inductor 110b is surrounded by the insulating case 140b, as in the case shown in Fig. 4.

Another guide piece 171 is installed along the connection path of the coil C. Due to the guide piece 171, a gap W2 between the coil C and the case 130 can be maintained and the electrical insulation of the coil C can be maintained.

The gap W1 between the coil C and the case 130 which is shown in Fig. 4 and the gap W2 between the coil C and the case 130 which is shown in Fig. 5 may have the same size or may have different sizes.

As described above, in accordance with the configuration and the operation of the present disclosure, the electrical insulation between two inductors can be maintained.

Further, when the inductor assembly is installed in the OBC, it is possible to maintain the electrical insulation between the inductor assembly and the PCB circuit board in the OBC except for the four coils drawn out from the two inductors.

For example, the four coils drawn out from the two inductors can be structurally fixed in the case. Therefore, the electrical insulation between the coil and the casing (or the insulating case) as well as the electrical insulation between the two inductors can be maintained. With this structure, the assembling performance can be improved.

Further, the open upper portion of the case where the two inductors are accommodated can be shielded by using the cover. Therefore, the electrical insulation between the inductor assembly and the PCB circuit board in the OBC can be sufficiently obtained after the inductor assembly is installed in the OBC.

Further, the positions of the four coils drawn out from the two inductors are guided to the respective soldering positions on the PCB circuit board by using the cover. Therefore, it is possible to provide improved convenience to the user.

The inductor assembly for the OBC of the electric vehicle in accordance with the present disclosure has been described above; however, it should be understood that the above-mentioned embodiments are not restrictive but are illustrative in all aspects. It should be understood that the drawings and detailed description thereto are not intended to limit the present disclosure to the particular form disclosed, but on the contrary, the intention is to cover all modifications, equivalents, and alternatives falling within the spirit and scope of the present disclosure as defined by the appended claims.

## Claims

1. An inductor assembly (100) for an on-board charger (OBC) of an electric vehicle, comprising:
a pair of inductors (110);
a case (130) for accommodating the inductors(110) therein;
a pair of insulating cases (140) installed in the case (130) for maintaining electrical insulation between the inductors (110);
a mold (150) molded in the case(130) for integrally fixing the inductors(110), the insulating cases(140) and the case (130); and
a cover (200) coupled to an upper portion of the case (130) for insulating the inductors (110) accommodated in the case (130) from the outside,
wherein four coils (111a 111b, 111c, 111d) are drawn out from the inductors (110), and wherein led-out positions of at most three of the four coils (111a,111b,111c,111d) are fixed by one of the insulating cases (140) and led-out positions of at least one of the four coils (111a,111b,111c,111d) are fixed by the other one of the insulating cases (140).

2. The inductor assembly (100) of claim 1, wherein the case (130) is made of a metal having a heat dissipation property, and the insulating cases (140) and the inductors (110) are installed in the case in this order through an open upper portion of the case (130).

3. The inductor assembly (100) of claim 1, wherein the cover (200) includes four protruding holders (210a,210b,210c,210d), wherein the four protruding holders (210a,210b,210c,210d) guide the four coils (111a,111b,111c,111d) to respective soldering positions when the four coils (111a,111b,111c,111d) are connected to the respective soldering positions after penetrating through the cover (200).

4. The inductor assembly (100) of claim 1, further comprising: a plurality of fastening pieces (161,163,165) between the case (130) and the cover (200), wherein the plurality of fastening pieces (161,163,165) guides assembly positions between the case (130) and the cover (200) to fasten them with one another.

5. The inductor assembly (100) of claim 1, further comprising: a plurality of guide pieces (171,173,175) for guiding a connection path of a coil (111a,111b,111c,111d) in the case (130), wherein the plurality of guide pieces (171,173,175) electrically insulates the coil (111a,111b,111c,111d) from the case (130) and the inductors (110).
